# EUROPEAN PATENT APPLICATION

(11) **EP 1 944 156 A1**
(43) Date of publication of application: **16.07.2008**
(21) Application number: 08425008.3
(22) Date of filing: 09.01.2008
(51) Int. Cl.: B32B 5/26, D04H 13/00

(54) **A thermoformable layered material and the production process thereof**

(30) Priority: 10.01.2007 IT FI20070003
(71) Applicant: Cavallaro, Marco, 50013 Campi Bisenzio, Fizenze (IT)
(72) Inventor: Cavallaro, Marco, 50013 Campi Bisenzio, Fizenze (IT)
(74) Representative: Mannucci, Michele

(57) **Abstract**

A decorative fabric made of polyester is prepared for the surface visible when installed and a nonwoven made of polyester fibers is prepared as the backing fabric; lamination is implemented by heating low-melt fibers present in the nonwoven.

## Description

The invention relates to a layered material for various uses, including interior coverings for motor vehicles and in particular for door and hatch panels, for roof panels, for door posts, for cargo covers and the like, where a formable material with heat-insulating, sound-insulating and externally acceptable characteristics is required.

To date, to form even a simple door panel, a sufficiently thick layer of wood stock - wood fibers and glue - must first be positioned in a mold, followed by a layer of fabric and an expanded polyurethane with which, after being subjected to heat and pressure during molding, the required panel is obtained.

The invention relates to a thermoformable layered material having specific thermoforming, heat-insulating and other requisites, which comprises a polyester fabric for the surface visible when installed and a nonwoven polyester structure for the interior, laminated to be positioned in the thermoforming mold.

The layer of the nonwoven structure can be composed of fibrous material made of thermoformable polyester, in which low-melt fibers are present.

The invention also relates to a process for forming said thermoformed layered material, comprising:
- preparation of a polyester fabric for the surface visible when installed;
- preparation of a polyester nonwoven for the interior;
- positioning of each of the aforesaid two components in laminating calenders or molds for lamination of said fabric and of said nonwoven with the aid of low-melt fibers and heat, in particular by heating the surface of the nonwoven.

The material in question is made of thermoformable technical fabric obtained by laminating the nonwoven backing constituted by a polyester nonwoven to the fabric having decorative and comfort functions, also made of polyester and intended to be visible when installed.

The particular structure of said support can be obtained with various layers of polyester mixed with suitable quantities of low-melt fibers, which allow lamination to the decorative fabric by means of heating the surface of the nonwoven, in particular using a flame.

By means of thermoforming in a calender or mold, the layered fabric is shaped with the aid of heat and pressure.

Following thermoforming, an article is obtained with the characteristic values of stiffness required for the manufacture of the end products, such as door panels and other objects or components.

With the system in question, the decorative fabric, already laminated to the nonwoven polyester backing structure, is positioned directly with a single operation in the calender or mold, and is thermoformed therein in a single step with the temperature and pressure parameters normally used to process the panel.

In the accompanying drawing, the production steps of the door-panel using the conventional production technology and the technology according to the invention are represented, to show the greater simplicity of the method according to the invention, which moreover eliminates all problems related to alignment and centering of the layers of textile components to be laminated, and others which will be apparent to those skilled in the art. In the drawing:
Figures 1 to 3 show sectional views of the steps of the production system of a panel according to the conventional system;
Figures 4 to 6 analogously show the steps of the system according to the invention;
Figures 7 and 8 show the components intended to be positioned between the two parts of the mold.

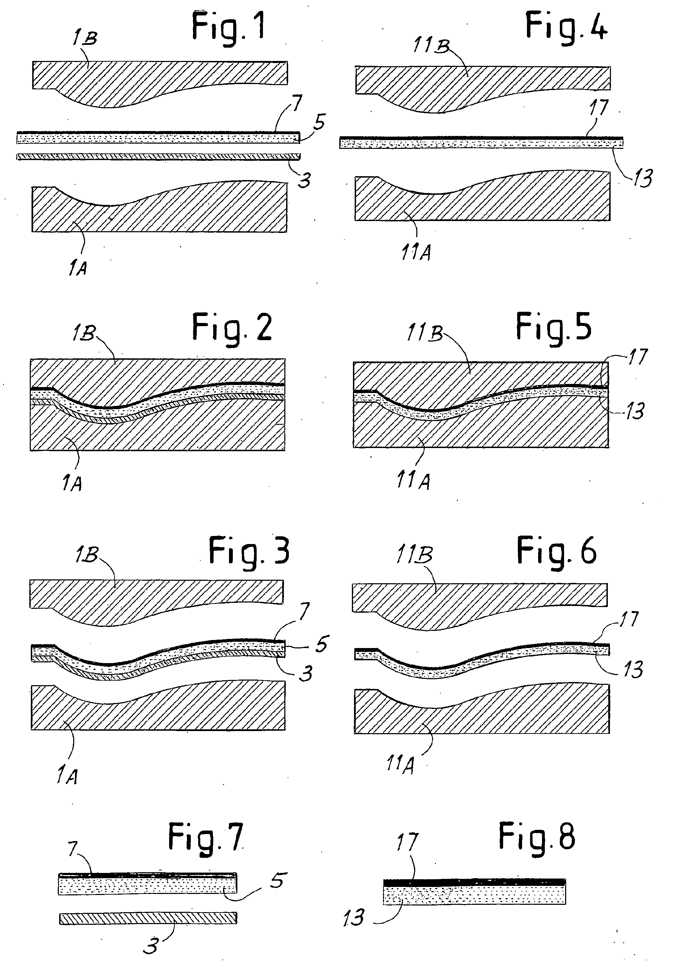

In Figures 1 to 3, 1A and 1B indicate the mold or calender for thermoforming the material. According to the conventional solution, both the layer 3 of wood stock - composed of wood fibers and stiffening glue - and the layers 5 of expanded polyurethane and 7 of the polyester fabric constituting the surface visible when installed, these layers 5 and 7 being preliminarily laminated to each other as indicated in Figure 7, are positioned between the two parts of the open mold. The mold is then closed and the three layers are laminated and thermoformed using specific glue. The above operations are laborious, slow and costly, as well as susceptible to human error.

Figures 4 to 6 show the mold or calender 11A, 11B - analogous to the one 1A, 1B - positioned between the two parts of which (Figure 4) is the assembly constituted by the two layers of nonwoven 13 and of decorative fabric 17 made of polyester fibers constituting the surface visible when installed; these two layers 13 and 17 are laminated by means of low-melt fibers of the nonwoven before being introduced between the two parts 11A, 11B of the mold, by heating using a flame or the like, therefore in practice a surface heating. The shaped end product is thus obtained by thermoforming. These operations are simpler compared to those indicated for thermoforming using the conventional system.

Other advantages deriving from the use of the laminated material 13, 17 with polyester and nonwoven insert (according to Figures 4 to 8) are, in particular:
- full recyclability of the finished product, thanks to the homogeneity of the materials 13 and 17 (100% polyester);
- greater speed of the preparatory operations for thermoforming;
- lower cost due to saving of the wood stock sheet 3;
- lower environmental impact, thanks to elimination of scraps from wood stock processing;
- full recyclability of the product and of processing waste, composed of 100% polyester fibers;
- possibility of obtaining a product in which extension of the various layers, rigidity and shape can be adjusted;
- lightness, stiffness, sound-absorption and unbreakability;
- absence of phenol, urea and formaldehyde resins;
- good dimensional stability and bacterial resistance.

It is understood that the drawing only shows an example provided by way of a practical arrangement of the invention, and that said invention can vary in shapes and arrangements without however departing from the scope of the concept on which the invention is based.

## Claims

1. A thermoformable layered material having specific thermoforming, heat-insulating and other requisites, **characterized in that** it comprises: a decorative polyester fabric for the surface visible when installed; and a nonwoven polyester layer for the interior, preliminarily laminated to be positioned in the thermoforming mold.

2. Layered material as claimed in claim 1, wherein said nonwoven layer is formed of fibrous material made of thermoformable polyester.

3. Layered material as claimed in claim 1 or 2, wherein the nonwoven layer comprises low-melt fibers.

4. A process for forming thermoformable layered material having specific thermoforming, heat-insulating and other requisites, **characterized in that** it comprises: preparation of a polyester fabric for the surface visible when installed, and preparation of a nonwoven polyester for the interior; lamination of said fabric and of said nonwoven and positioning thereof in the thermoforming mold or calender.

5. Process as claimed in claim 4, wherein lamination is implemented by surface melting of low-melt fibers subsequent to heating of the surface of the nonwoven.

6. Process as claimed in claim 4 and 5, wherein thermoforming in a mold or calender is implemented to reach the required characteristics of stiffness, depending on the applications for which the layered material is intended.
